# EUROPEAN PATENT SPECIFICATION

(11) **EP 3 185 131 B1**
(45) Date of publication and mention of the grant of the patent: **08.06.2022**
(21) Application number: 16205859.8
(22) Date of filing: 21.12.2016
(51) Int. Cl.: G06F 13/42

(54) **METHOD AND DEVICE FOR SWITCHING STATE**
VERFAHREN UND VORRICHTUNG ZUM UMSCHALTEN VON ZUSTÄNDEN
PROCÉDÉ ET DISPOSITIF DE COMMUTATION D'ÉTAT

(30) Priority: 21.12.2015 CN 201510965345
(43) Date of publication of application: 28.06.2017
(73) Proprietor: Xiaomi Inc., Beijing 100085 (CN)
(72) Inventor: LEI, Zhenfei, BEIJING, 100085 (CN); WANG, Xiangdong, BEIJING, 100085 (CN); SUN, Wei, BEIJING, 100085 (CN)
(74) Representative: Cabinet Beau de Loménie

(56) References cited:
- CN-A- 105 068 958
- "Universal serial bus interfaces for data and power - Part 1-2: Common components - USB Power Delivery specification", IEC 62680-1-2:2016, IEC, 3, RUE DE VAREMBÉ, PO BOX 131, CH-1211 GENEVA 20, SWITZERLAND, 11 December 2015 (2015-12-11), pages 1-470, XP082004554, [retrieved on 2016-01-08]
- Andrew Rogers: "Introduction to USB Type-C(TM)", , 30 January 2015 (2015-01-30), pages 1-20, XP055356654, Retrieved from the Internet: URL:http://ww1.microchip.com/downloads/en/ AppNotes/00001953A.pdf [retrieved on 2017-03-20]

## Description

### TECHNICAL FIELD

The present invention generally relates to the technical field of terminal, and more particularly, to a method and device for switching state.

### BACKGROUND

With continuous development of USB (Universal Serial Bus) interface technology, the user may connect USB interfaces of two apparatuses with each other by using a connecting cable, so as to achieve data interaction or electric energy transmission between the apparatuses.

After connecting the two apparatuses by using the connecting cable, one apparatus of the two apparatuses may read data from and write data into the other apparatus via the connecting cable, the former apparatus being called a master apparatus (or an apparatus in a master state) and the latter apparatus a slave apparatus (or an apparatus in a slave state), while the slave apparatus cannot read data from or write data into the master apparatus. After being connected by the connecting cable, the two apparatuses are randomly in a master state and a slave state, respectively, and cannot be switched, which make the data interaction between the apparatuses rigid and inflexible.

Document CN 105 068 958 A discloses a switching control method and device.

### SUMMARY

The present invention is defined in the independent claims. The dependent claims define embodiments thereof.

The technical solutions provided by embodiments of the present invention may have the following beneficial effects.

After receiving the state switching instruction, the level of the CC in the USB interface circuit is changed via the logic controller according to the state switching instruction, so as to achieve the switching of master state and slave state between the two apparatuses, which solves the problem of rigid and inflexible data interaction between the apparatuses due to that after two apparatuses are connected via the connecting line, the master and slave states are random and cannot be switched; and achieves that the master and slave states can be switched between two connected apparatuses by triggering a corresponding state switching instruction via a user, thereby enabling a more flexible data interaction between the apparatuses.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 illustrates a structural schematic diagram of an implementing environment involved by individual embodiments of the present invention;
Fig. 2 is a method flow chart of a method for switching state, according to an exemplary embodiment;
Fig. 3A is a method flow chart of a method for switching state, according to another exemplary embodiment;
Fig. 3B is a flow chart of determining the device state involved by the method for switching state shown in Fig. 3A;
Figs. 3C and 3D are schematic diagrams of implementing the method for switching state shown in Fig. 3A;
Fig. 4 is a block diagram of a device for switching state, according to an exemplary embodiment;
Fig. 5 is a block diagram of a device for switching state, according to another exemplary embodiment; and
Fig. 6 is a block diagram of a device for switching state, according to an exemplary embodiment.

### DETAILED DESCRIPTION

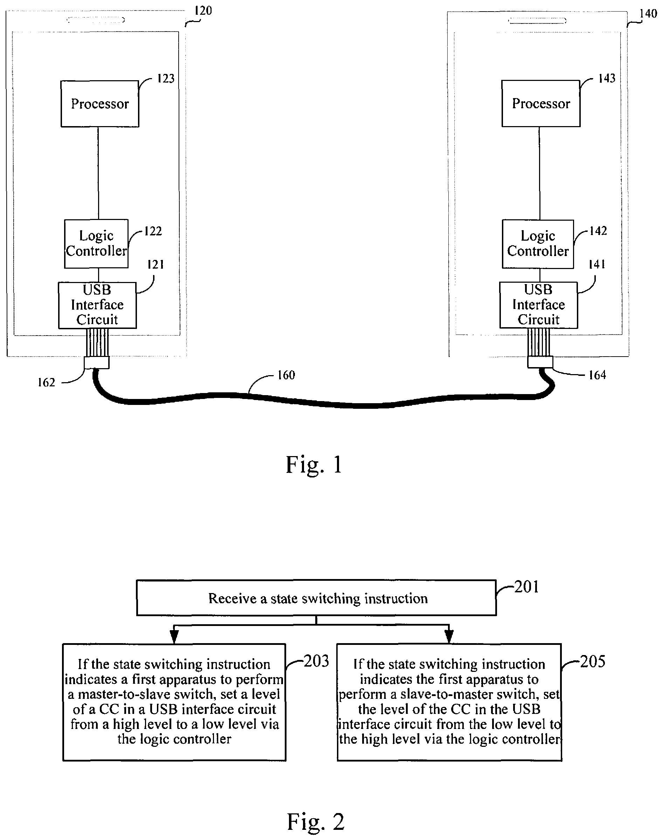

The following description refers to the accompanying drawings in which the same numbers in different drawings represent the same or similar elements unless otherwise represented. Fig. 1 illustrates a structural schematic diagram of an implementing environment provided by individual embodiments of the present invention. As shown in Fig. 1, the implementing environment includes: a first apparatus 120, a second apparatus 140 and a connecting cable 160.

The first apparatus 120 and the second apparatus 140 may be a smart phone, a tablet computer, an E-book reader, a MP3 (Moving Picture Experts Group Audio Layer III) player, a MP4 (Moving Picture Experts Group Audio Layer IV) player, a laptop portable computer, or the like. In Fig. 1, both the first apparatus 120 and the second apparatus 140 are smart phones.

The first apparatus 120 and the second apparatus 140 are connected via the connecting cable 160.

The first apparatus 120 is provided with a USB interface, a USB interface circuit 121 corresponding to the USB interface, and a logic controller 122 for controlling the USB interface circuit 121. The logic controller 122 is used for controlling the USB interface circuit 121 according to a control instruction issued from a processor 123. Similar with the first apparatus 120, the second apparatus 140 is provided with a USB interface, a USB interface circuit 141 corresponding to the USB interface, a logic controller 142 for controlling the USB interface circuit 141, and a processor 143. The USB interfaces of the first apparatus 120 and the second apparatus 140 may be a Type C interface, the USB interface circuit 121 and the USB interface circuit 141 are interface circuits corresponding to the Type C interface, and the connecting cable 160 is a Type C connecting cable. In addition, the logic controller 122 in the first apparatus 120 and the logic controller 142 in the second apparatus 140 may be a logic circuit electrically connected with the corresponding USB interface circuit. Upon receiving the control instruction, the logic circuit changes a level (e.g. voltage level) of a CC pin in the connected USB interface circuit according to the control instruction.

When the first apparatus 120 and the second apparatus 140 are connected via the connecting cable 160, a first joint 162 of the connecting cable 160 is connected with the USB interface of the first apparatus 120, and a second joint 164 of the connecting cable 160 is connected with the USB interface of the second apparatus 140. In the first apparatus 120 and the second apparatus 140 connected via the connecting cable 160, one apparatus is a master apparatus, and the other apparatus is a slave apparatus. The master-slave relationship between the two apparatuses is generated randomly.

For convenience of description, in the following embodiments, illustrations are given by using an example in which both the first apparatus 120 and the second apparatus 140 are smart phones, both the USB interfaces in the first apparatus 120 and the second apparatus 140 are Type C interfaces, and the connecting cable 160 is the Type C connecting cable.

Fig. 2 is a method flow chart of a method for switching state, according to an exemplary embodiment. In the present embodiment, illustrations are given by applying the method for switching state to the first apparatus 120 in the implementing environment shown in Fig. 1. The method for switching state includes the following steps.

In step 201, a state switching instruction is received.

The state switching instruction is triggered by a user for instructing the first apparatus to change its current apparatus state.

In step 203, if the state switching instruction instructs the first apparatus to perform a master-to-slave switch, a level (e.g. voltage level) of a CC pin in a USB interface circuit is set from a high level to a low level via a logic controller.

In step 205, if the state switching instruction instructs the first apparatus to perform a slave-to-master switch, the level of the CC pin in the USB interface circuit is set from the low level to the high level via the logic controller.

The master-to-slave switch refers to switching from a master apparatus state to a slave apparatus state, and the slave-to-master switch refers to switching from a slave apparatus state to a master apparatus state. In a USB interface circuit (e.g. a USB interface circuit conforming to the Type C interface protocol), two apparatuses connected via the connecting cable determine their states as a master state or a slave state in the connection according to the level of the CC pin. If the level of the CC pin in the USB interface circuit corresponding to the apparatus is a low level, this apparatus is a slave apparatus (or in a slave apparatus state); and if the level of the CC pin in the USB interface circuit corresponding to the apparatus is the high level, this apparatus is a master apparatus (or in a master apparatus state).

The first apparatus can achieve switching between the master apparatus state and the slave apparatus state by changing the level of the CC pin in the USB interface circuit via the logic controller according to the received state switching instruction.

In summary, through the method for switching state provided by the embodiment, after receiving the state switching instruction, the level of the CC pin in the USB interface circuit is changed via the logic controller according to the state switching instruction, so as to achieve the switching of master state and slave state between the two apparatuses, which solves the problem of rigid and inflexible data interaction between the apparatuses after the two apparatuses are connected via the connecting cable, the master and slave states of the apparatuses being random and impossible to be switched; and achieves that the master and slave states can be switched between two connected apparatuses by triggering a corresponding state switching instruction via a user, thereby enabling a more flexible data interaction between the apparatuses.

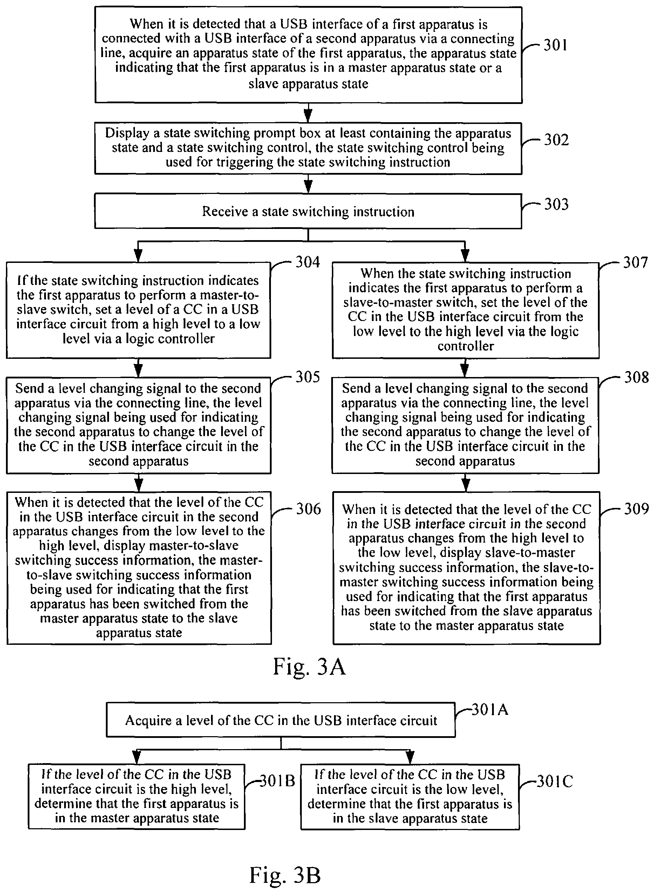

Fig. 3A is a method flow chart of a method for switching state, according to another exemplary embodiment. In the present embodiment, illustrations are given by applying the method for switching state to the first apparatus 120 in the implementing environment shown in Fig. 1. The method for switching state includes the following steps.

In step 301, when it is detected that a USB interface of a first apparatus is connected with a USB interface of a second apparatus via a connecting cable, an apparatus state of the first apparatus is acquired, the apparatus state indicating that the first apparatus is in a master apparatus state or a slave apparatus state.

When the USB interface of the first apparatus is connected with the USB interface of the second apparatus via the connecting cable, the processor of the first apparatus may identify the connected second apparatus via the USB interface circuit. During a stage of establishing the connection, the first apparatus and the second apparatus may respectively determine their states: one in a master state and the other in a slave state, randomly by competition. The master apparatus (i.e., the apparatus in the master apparatus state) in the two apparatuses may read data from and write data into the slave apparatus (i.e., the apparatus in the slave apparatus state) via the connecting cable, while the slave apparatus cannot read data from or write data into the master apparatus.

In order to realize the switching of master and slave states between the two apparatuses, after establishing connection between the first apparatus and the second apparatus, both the first apparatus and the second apparatus need to acquire their apparatus states, and further determine which kind of switching of master and slave states may be performed according to the apparatus states. As one possible implementing manner, as shown in Fig. 3B, this step may include the following steps.

In step 301A, a level of the CC pin in the USB interface circuit is acquired.

Since in the USB interface (e.g. a USB conforming to the Type C interface protocol), the level of the CC pin in the USB interface circuit corresponding to the USB interface is used for representing the apparatus state of the apparatus in the connection, the first apparatus may acquire the level of the CC pin in the USB interface circuit via the processor.

Accordingly, the processor of the second apparatus may, after detecting that the connection with the first apparatus is established, acquire the level of the CC pin in the USB interface circuit of the second apparatus via the processor.

In step 301B, if the level of the CC pin in the USB interface circuit is the high level, it is determined that the first apparatus is in the master apparatus state.

If the acquired level of the CC pin in the USB interface circuit is the high level, then the first apparatus determines that the first apparatus is in the master apparatus state currently; accordingly, when the first apparatus is in the master apparatus state, the level of the CC pin in the USB interface circuit acquired by the second apparatus should be the low level, i.e., the second apparatus is in the slave apparatus state currently.

In step 301C, if the level of the CC pin in the USB interface circuit is the low level, it is determined that the first apparatus is in the slave apparatus state.

Similar to the above step 301B, if the acquired level of the CC pin in the USB interface circuit is the low level, then the first apparatus determines that the first apparatus is in the slave apparatus state currently; and the second apparatus determines that the second apparatus is in the master apparatus state currently.

In step 302, a state switching prompt box at least containing the apparatus state and a state switching control option is displayed, the state switching control option being used for triggering the state switching instruction.

For facilitating the user to know the master and slave states between the apparatuses and switch the master and slave states of the two apparatuses according to requirements, the first apparatus, after determining its current apparatus state, displays the current apparatus state, and provides a corresponding state switching control option to the user for triggering the state switching instruction.

After connecting the first and second apparatuses, the first apparatus pops out a prompt box which includes the current apparatus state of the first apparatus and the state switching control, wherein the state switching control option may be displayed in a form of button icon. Correspondingly, the second apparatus may also pop out a corresponding prompt box for displaying the current apparatus state and the state switching control option. It should be noted that the first and second apparatuses may also be installed with corresponding master-slave state switching software application. After the connection of the first and second apparatuses, the master-slave state switching software application is automatically started, and a corresponding apparatus state and a state switching control option are displayed in a software application interface.

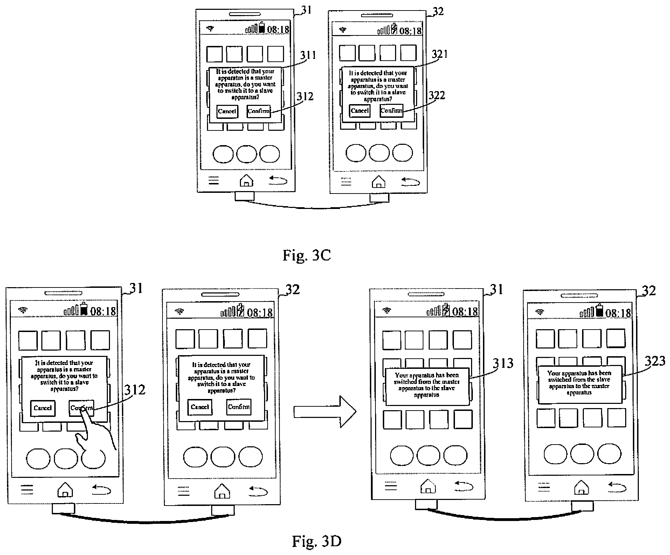

For example, as shown in Fig. 3C, after connecting the first apparatus 31 and the second apparatus 32 via the connecting cable, the first apparatus 31 displays a state switching prompt box 311 which contains a current apparatus state of the first apparatus 31 and a state switching button icon 312; and the second apparatus 32 displays a state switching prompt box 321 which contains a current apparatus state of the second apparatus 32 and a state switching button icon 322.

In step 303, a state switching instruction is received.

When the user needs to change the current apparatus state of the apparatus, he/she may trigger the state switching instruction corresponding to the current apparatus state via the state switching control option in the state switching prompt box, wherein the corresponding relationship between the state switching instruction and the apparatus state may be illustratively shown as Table 1 below.

**Table 1**

| Apparatus State | State Switching Instruction |
|---|---|
| Master apparatus state | Master-to-slave switching instruction |
| Slave apparatus state | Slave- to-master switching instruction |

Accordingly, the first apparatus receives the state switching instruction.

In step 304, if the state switching instruction instructs the first apparatus to perform a master-to-slave switch, a level of a CC pin in a USB interface circuit is set from a high level to a low level via a logic controller.

When the first apparatus is in the master apparatus state, the state switching control is used for triggering the master-to-slave switching instruction. Correspondingly, the processor in the first apparatus, after receiving the master-to-slave switching instruction, knows that it needs to switch the apparatus state to the slave apparatus state, and sends a control instruction to a logic controller for controlling the USB interface circuit. After receiving the control instruction, the logic controller sets the level of the CC pin in the USB interface circuit from the high level to the low level.

In step 305, a level changing signal is sent to the second apparatus via the connecting cable, the level changing signal being used for indicating the second apparatus to change the level of the CC pin in the USB interface circuit in the second apparatus.

When the first apparatus changes its apparatus state, the second apparatus also needs to switch its apparatus state. As one possible implementing manner, the first apparatus may send the level changing signal to the second apparatus via the connecting cable. After receiving the level changing signal, the second apparatus sends the control instruction to a logic controller corresponding to the second apparatus via the processor, for indicating the logic controller to change the level of the CC pin in the USB interface circuit.

It should be noted, in other possible implementing manners, the processor in the second apparatus may also monitor the level of the CC pin in the USB interface circuit of the first apparatus via the connecting cable in real time, and automatically change the level of the CC pin in its USB interface circuit when it is monitored that the level of the CC pin in the USB interface circuit of the first apparatus changes.

In step 306, when it is detected that the level of the CC pin in the USB interface circuit in the second apparatus changes from the low level to the high level, master-to-slave switching success information is displayed, the master-to-slave switching success information being used for indicating that the first apparatus has been switched from the master apparatus state to the slave apparatus state.

The processor of the first apparatus monitors whether the level of the CC pin in the USB interface circuit in the second apparatus changes via the connecting cable, and displays the master-to-slave switching success information when the level of the CC pin in the first apparatus changes from the high level to the low level and the level of the CC pin in the second apparatus changes from the low level to the high level, so as to notify the user that the first apparatus has been switched from the master apparatus to the slave apparatus, and the second apparatus has been switched from the slave apparatus to the master apparatus.

For example, as shown in Fig. 3D, the user switches the apparatus states by clicking the state switching button icon 312 displayed in the first apparatus 31; and after the completion of the switching of the apparatus states, the first apparatus 31 and the second apparatus 32 respectively display the corresponding switching success information 313 and switching success information 323.

Before the state switching, the first apparatus which functions as the master apparatus may read data from and write data into the second apparatus which functions as the slave apparatus; after the state switching, the second apparatus which functions as the master apparatus may read data from and write data into the first apparatus which functions as the slave apparatus. During the whole state switching, the user only needs to trigger the state switching control, and the state switching process is simple and quick.

It should be noted that for facilitating the user to switch the apparatus state repeatedly, during the connection between the first and second apparatuses, the state switching control option may be provided in a dropdown menu, and when the user needs to switch the apparatus state, he/she only needs to click the state switching control option in the dropdown menu.

In step 307, when the state switching instruction indicates the first apparatus to perform a slave-to-master switch, the level of the CC pin in the USB interface circuit is set from the low level to the high level via the logic controller.

When the first apparatus is in the slave apparatus state, the state switching control is used for triggering the slave-to-master switching instruction. Correspondingly, the processor in the first apparatus, after receiving the slave-to-master switching instruction, knows that it needs to switch the apparatus state to the master apparatus state, and sends a control instruction to a logic controller for controlling the USB interface circuit. After receiving the control instruction, the logic controller sets the level of the CC pin in the USB interface circuit from the low level to the high level.

In step 308, a level changing signal is sent to the second apparatus via the connecting cable, the level changing signal being used for indicating the second apparatus to change the level of the CC pin in the USB interface circuit in the second apparatus.

When the first apparatus changes its apparatus state, the second apparatus also needs to switch its apparatus state. The first apparatus sends the level changing signal to the second apparatus via the connecting cable. After receiving the level changing signal, the second apparatus sends the control instruction to a logic controller corresponding to the second apparatus via the processor, for instructing the logic controller to change the level of the CC pin in the USB interface circuit.

In step 309, when it is detected that the level of the CC pin in the USB interface circuit in the second apparatus changes from the high level to the low level, slave-to-master switching success information is displayed, the slave-to-master switching success information being used for indicating that the first apparatus has been switched from the slave apparatus state to the master apparatus state.

The processor of the first apparatus monitors whether the level of the CC pin in the USB interface circuit in the second apparatus changes via the connecting cable, and displays the slave-to-master switching success information when the level of the CC pin in the first apparatus changes from the low level to the high level and the level of the CC pin in the second apparatus changes from the high level to the low level, so as to notify the user that the first apparatus has been switched from the slave apparatus to the master apparatus, and the second apparatus has been switched from the master apparatus to the slave apparatus.

In summary, through the method for switching state provided by the embodiment, after receiving the state switching instruction, the level of the CC pin in the USB interface circuit is changed via the logic controller according to the state switching instruction, so as to achieve the switching of master state and slave state between the two apparatuses, which solves the problem of rigid and inflexible data interaction between the apparatuses due to that after two apparatuses are connected via the connecting cable, the master and slave states are random and cannot be switched; and achieves that the master and slave states can be switched between two connected apparatuses by triggering a corresponding state switching instruction via a user, thereby enabling a more flexible data interaction between the apparatuses.

In the present embodiment, after being connected with the second apparatus via the connecting cable, the first apparatus displays the current apparatus state of the first apparatus and a corresponding state switching control, and when the user triggers the state switching control, the first apparatus performs the switching of the master and slave states. The whole state switching procedure is simple and quick, and the efficiency of state switching can be greatly improved.

In the present embodiment, while the first apparatus switches the apparatus state, the second apparatus changes the apparatus state accordingly based on the switching condition of the first apparatus, and displays switching success information when both the apparatus states of the first and second apparatuses change, so as to prompt the user that the state switching is successful. In this way, the whole switching procedure is more intuitive, and the user's operation is facilitated.

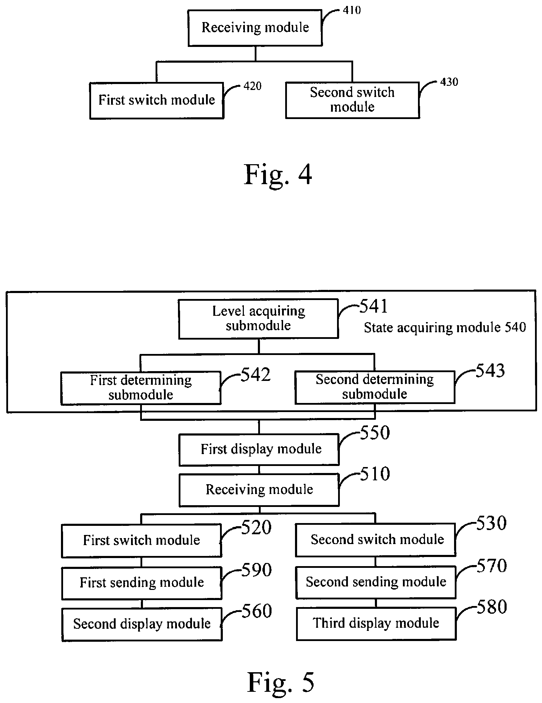

Fig. 4 is a block diagram of a device for switching state, according to an exemplary embodiment. The device for switching state may achieve a whole or a part of the first apparatus in Fig. 1 through hardware, or a combination of hardware and software. The device for switching state includes: a receiving module 410, a first switch module 420, and a second switch module 430.

The receiving module 410 is configured to receive a state switching instruction.

The first switch module 420 is configured to, when the state switching instruction instructs a first apparatus to perform a master-to-slave switch, set a level of a CC pin in a USB interface circuit from a high level to a low level via a logic controller.

The second switch module 430 is configured to, when the state switching instruction instructs the first apparatus to perform a slave-to-master switch, set the level of the CC pin in the USB interface circuit from the low level to the high level via the logic controller.

In summary, through the device for switching state provided by the embodiment, after receiving the state switching instruction, the level of the CC pin in the USB interface circuit is changed via the logic controller according to the state switching instruction, so as to achieve the switching of master state and slave state between the two apparatuses, which solves the problem of rigid and inflexible data interaction between the apparatuses due to that after two apparatuses are connected via the connecting cable, the master and slave states are random and cannot be switched; and achieves that the master and slave states can be switched between two connected apparatuses by triggering a corresponding state switching instruction via a user, thereby rendering a more flexible data interaction between the apparatuses.

Fig. 5 is a block diagram of a device for switching state, according to another exemplary embodiment. The device for switching state may achieve a whole or a part of the first apparatus in Fig. 1 through hardware, or a combination of hardware and software. The device for switching state includes: a receiving module 510, a first switch module 520, and a second switch module 530.

The receiving module 510 is configured to receive a state switching instruction.

The first switch module 520 is configured to, when the state switching instruction instructs a first apparatus to perform a master-to-slave switch, set a level of a CC pin in a USB interface circuit from a high level to a low level via a logic controller.

The second switch module 530 is configured to, when the state switching instruction instructs the first apparatus to perform a slave-to-master switch, set the level of the CC pin in the USB interface circuit from the low level to the high level via the logic controller.

In an embodiment, the device further includes: a state acquiring module 540, and a first display module 550.

The state acquiring module 540 is configured to, when it is detected that a USB interface of the first apparatus is connected with a USB interface of a second apparatus via a connecting cable, acquire an apparatus state of the first apparatus, the apparatus state indicating that the first apparatus is in a master apparatus state or a slave apparatus state.

The first display module 550 is configured to display a state switching prompt box at least containing the apparatus state and a state switching control, the state switching control being used for triggering the state switching instruction.

In an embodiment, the state acquiring module 540 includes: a level acquiring submodule 541, a first determining submodule 542, and a second determining submodule 543.

The level acquiring submodule 541 is configured to acquire a level of the CC pin in the USB interface circuit.

The first determining submodule 542 is configured to, when the level of the CC pin in the USB interface circuit is the high level, determine that the first apparatus is in the master apparatus state.

The second determining submodule 543 is configured to, when the level of the CC pin in the USB interface circuit is the low level, determine that the first apparatus is in the slave apparatus state.

In an embodiment, the device further includes: a first sending module 590, and a second display module 560.

The first sending module 590 is configured to send a level changing signal to the second apparatus via the connecting cable, the level changing signal being used for indicating the second apparatus to change the level of the CC pin in the USB interface circuit in the second apparatus.

The second display module 560 is configured to, when it is detected that the level of the CC pin in the USB interface circuit in the second apparatus changes from the low level to the high level, display master-to-slave switching success information, the master-to-slave switching success information being used for indicating that the first apparatus has been switched from the master apparatus state to the slave apparatus state.

In an embodiment, the device further includes: a second sending module 570, and a third display module 580.

The second sending module 570 is configured to, send a level changing signal to the second apparatus via the connecting cable, the level changing signal being used for instructing the second apparatus to change the level of the CC pin in the USB interface circuit in the second apparatus.

The third display module 580 is configured to, when it is detected that the level of the CC pin in the USB interface circuit in the second apparatus changes from the high level to the low level, display slave-to-master switching success information, the slave-to-master switching success information being used for indicating that the first apparatus has been switched from the slave apparatus state to the master apparatus state.

In an embodiment, the USB interface circuit is an interface circuit corresponding to a Type C interface.

In summary, through the device for switching state provided by the embodiment, after receiving the state switching instruction, the level of the CC pin in the USB interface circuit is changed via the logic controller according to the state switching instruction, so as to achieve the switching of master state and slave state between the two apparatuses, which solves the problem of rigid and inflexible data interaction between the apparatuses due to that after two apparatuses are connected via the connecting cable, the master and slave states are random and cannot be switched; and achieves that the master and slave states can be switched between two connected apparatuses by triggering a corresponding state switching instruction via a user, thereby rendering a more flexible data interaction between the apparatuses.

In the present embodiment, after being connected with the second apparatus via the connecting cable, the first apparatus displays the current apparatus state of the first apparatus and a corresponding state switching control, and when the user triggers the state switching control, the first apparatus performs the switching of the master and slave states. The whole state switching procedure is simple and quick, and the efficiency of state switching can be greatly improved.

In the present embodiment, while the first apparatus switches the apparatus state, the second apparatus changes the apparatus state accordingly based on the switching condition of the first apparatus, and displays switching success information when both the apparatus states of the first and second apparatuses change, so as to prompt the user that the state switching is successful. In this way, the whole switching procedure is more intuitive, and the user's operation is facilitated.

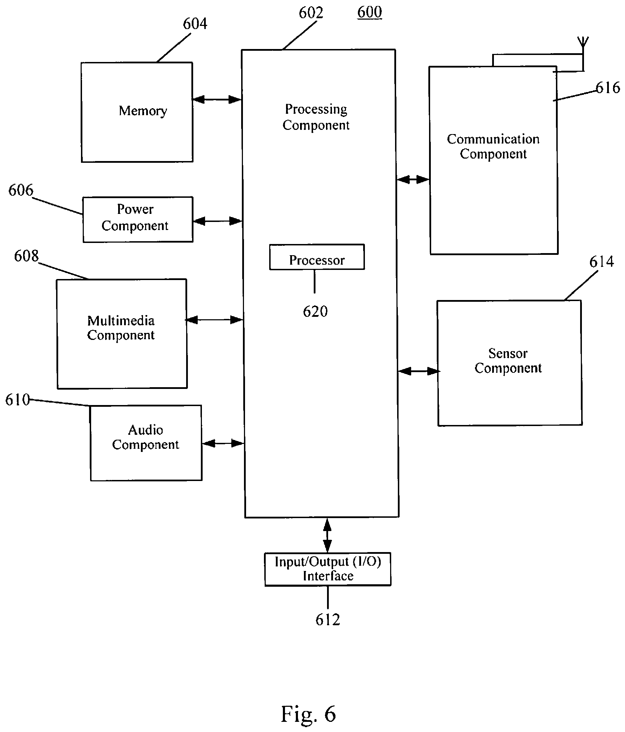

Fig. 6 is a block diagram of a device 600 for switching state, according to an exemplary embodiment. For example, the device 600 may be an electronic device provided with a USB interface, such as a smart phone, a tablet computer, or an E-book reader.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602. In the present embodiment, the processor 620 is connected with a control pin of an IC in the interface circuit for receiving the state switching request, and sending a corresponding state switching signal to the IC in the interface circuit via the control pin according to the state switching request.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600. In the present embodiment, the power component 606 is electronically connected with a PMIC in the interface circuit.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button. In the present embodiment, the I/O interface 612 may be a USB interface.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 604 including instructions, the above instructions are executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by the processor of the device 600, enables the device 600 to perform the method for switching state provided by the above-mentioned embodiments.

## Claims

1. A method for switching state, applied in a first apparatus (120,31) comprising a first Universal Serial Bus 'USB' interface and a first USB interface circuit (121), comprising:
when it is detected that the first USB interface is connected with a second USB interface of a second apparatus (140,32) via a connecting cable (160), acquiring (301) an apparatus state of the first apparatus (120,31), the apparatus state indicating that the first apparatus (120,31) is in a master apparatus state or a slave apparatus state; and
displaying (302) a state switching prompt box (311,321) at least containing the apparatus state and a state switching control option, the state switching control option being used for triggering a state switching instruction;
receiving (201) the state switching instruction triggered with the state switching control option, for instructing the first apparatus to change its current apparatus state;
when the state switching instruction instructs the first apparatus (120,31) to perform a master-to-slave switch, setting (203) a level of a Configuration Channel 'CC' pin in the USB interface circuit (121) from a high level to a low level via a logic controller;
when the state switching instruction instructs the first apparatus (120,31) to perform a slave-to-master switch, setting (205) the level of the CC pin in the first USB interface circuit from the low level to the high level via the logic controller;
sending (305) a level changing signal to the second apparatus (140,32) via the connecting cable (160), the level changing signal being used for indicating the second apparatus (140, 32) to change the level of the CC pin in a second USB interface circuit in the second apparatus (140, 32);
when it is detected that the level of the CC pin in the second USB interface circuit in the second apparatus (140, 32) changes from the low level to the high level, displaying (306) master-to-slave switching success information, the master-to-slave switching success information being used for indicating that the first apparatus (120,31) has been switched from the master apparatus state to the slave apparatus state;
when it is detected that the level of the CC pin in the second USB interface circuit in the second apparatus (140, 32) changes from the high level to the low level, displaying (309) slave-to-master switching success information, the slave-to-master switching success information being used for indicating that the first apparatus (120, 31) has been switched from the slave apparatus state to the master apparatus state.

2. The method of claim 1, wherein the acquiring (301) the apparatus state of the first apparatus (120,31) comprises:
acquiring (301A) a level of the CC pin in the USB interface circuit;
when the level of the CC pin in the USB interface circuit is the high level, determining (301B) that the first apparatus (120,31) is in the master apparatus state; and
when the level of the CC pin in the USB interface circuit is the low level, determining (301C) that the first apparatus (120,31) is in the slave apparatus state.

3. The method of claim 1 or 2, wherein the first USB interface circuit is an interface circuit corresponding to a Type C interface.

4. A device for switching state, comprising:
a first Universal Serial Bus 'USB' interface;
a first USB interface circuit (121);
a state acquiring module (540) configured to, when it is detected that the first USB interface of the first apparatus (120, 31) is connected with a second USB interface of a second apparatus (140,32) via a connecting cable (160), acquire an apparatus state of the first apparatus (120,31), the apparatus state indicating that the first apparatus (120, 31) is in a master apparatus state or a slave apparatus state;
a first display module (550) configured to display a state switching prompt box (311, 321) at least containing the apparatus state and a state switching control option, the state switching control option being used for triggering a state switching instruction;
a receiving module (410) configured to receive the state switching instruction triggered with the state switching control option, for instructing the first apparatus to change its current apparatus state;
a first switch module (420) configured to, when the state switching instruction instructs the first apparatus (120,31) to perform a master-to-slave switch, set a level of a Configuration Channel pin 'CC' pin in the first USB interface circuit from a high level to a low level via a logic controller;
a second switch module (430) configured to, when the state switching instruction instructs the first apparatus (120,31) to perform a slave-to-master switch, set the level of the CC pin in the first USB interface circuit from the low level to the high level via the logic controller;
a first sending module (590) configured to send a level changing signal to the second apparatus (140,32) via the connecting cable (160), the level changing signal being used for indicating the second apparatus (140,32) to change the level of the CC pin in a second USB interface circuit in the second apparatus (140,32);
a second display module (560) configured to, when it is detected that the level of the CC pin in the second USB interface circuit in the second apparatus (140, 32) changes from the low level to the high level, display master-to-slave switching success information, the master-to-slave switching success information being used for indicating that the first apparatus (120, 31) has been switched from the master apparatus state to the slave apparatus state; and
a third display module (580) configured to, when it is detected that the level of the CC pin in the second USB interface circuit in the second apparatus (140, 32) changes from the high level to the low level, display slave-to-master switching success information, the slave-to-master switching success information being used for indicating that the first apparatus (120, 31) has been switched from the slave apparatus state to the master apparatus state.

5. The device of claim 4, wherein the state acquiring module (540) comprises:
a level acquiring submodule (541) configured to acquire a level of the CC pin in the USB interface circuit;
a first determining submodule (542) configured to, when the level of the CC pin in the USB interface circuit is the high level, determine that the first apparatus (120,31) is in the master apparatus state; and
a second determining submodule (543) configured to, when the level of the CC pin in the USB interface circuit is the low level, determine that the first apparatus (120,31) is in the slave apparatus state.

6. The device of claim 4 or 5, wherein the USB interface circuit is an interface circuit corresponding to a Type C interface.

7. A computer program, which when executing on a processor of a device, performs a method according to any one of claims 1 to 3.

8. A recording medium readable by a computer and having recorded thereon a computer program according to claim 7.

## Patentansprüche

1. Verfahren zum Umschalten eines Zustands, das in einem ersten Gerät (120, 31) angewendet wird, das eine erste Universal-Serial-Bus-"USB"-Schnittstelle und eine erste USB-Schnittstellenschaltung (121) umfasst, umfassend:
wenn erkannt wird, dass die erste USB-Schnittstelle mit einer zweiten USB-Schnittstelle eines zweiten Geräts (140, 32) über ein Verbindungskabel (160) verbunden ist, Erfassen (301) eines Gerätezustands des ersten Geräts (120, 31), wobei der Gerätezustand anzeigt, dass sich das erste Gerät (120, 31) in einem Master-Gerätezustand oder in einem Slave-Gerätezustand befindet, und
Anzeigen (302) eines Zustandsumschalt-Eingabeaufforderungsfeldes (311, 321), das zumindest den Gerätezustand und eine Zustandsumschalt-Steueroption enthält, wobei die Zustandsumschalt-Steueroption zum Auslösen einer Zustandsumschaltanweisung verwendet wird.
Empfangen (201) der Zustandsumschaltanweisung, die mit der Zustandsumschalt-Steueroption ausgelöst wurde, um das erste Gerät anzuweisen, seinen aktuellen Gerätezustand zu ändern,
wenn die Zustandsumschaltanweisung das erste Gerät (120, 31) anweist, eine Master-zu-Slave-Umschaltung durchzuführen, Einstellen (203) eines Pegels eines Konfigurationskanal-"CC"-Pins in der USB-Schnittstellenschaltung (121) von einem hohen Pegel auf einen niedrigen Pegel über eine Logiksteuerung,
wenn die Zustandsumschaltanweisung das erste Gerät (120, 31) anweist, eine Slave-zu-Master-Umschaltung durchzuführen, Einstellen (205) des Pegels des CC-Pins in der ersten USB-Schnittstellenschaltung von dem niedrigen Pegel auf den hohen Pegel über die Logiksteuerung,
Senden (305) eines Pegeländerungssignals an das zweite Gerät (140, 32) über das Verbindungskabel (160), wobei das Pegeländerungssignal verwendet wird, um dem zweiten Gerät (140, 32) anzuzeigen, den Pegel des CC-Pins in einer zweiten USB-Schnittstellenschaltung in dem zweiten Gerät (140, 32) zu ändern,
wenn erkannt wird, dass sich der Pegel des CC-Pins in der zweiten USB-Schnittstellenschaltung in dem zweiten Gerät (140, 32) von dem niedrigen Pegel auf den hohen Pegel ändert, Anzeigen (306) von Master-zu-Slave-Umschalt-Erfolgsinformationen, wobei die Master-zu-Slave-Umschalt-Erfolgsinformationen dazu verwendet werden, anzuzeigen, dass das erste Gerät (120, 31) von dem Master-Gerätezustand in den Slave-Gerätezustand umgeschaltet worden ist,
wenn erkannt wird, dass sich der Pegel des CC-Pins in der zweiten USB-Schnittstellenschaltung in dem zweiten Geräte (140, 32) von dem hohen Pegel zu dem niedrigen Pegel ändert, Anzeigen (309) von Slave-zu-Master-Umschalt-Erfolgsinformationen, wobei die Slave-zu-Master-Umschalt-Erfolgsinformationen verwendet werden, um anzuzeigen, dass das erste Gerät (120, 31) von dem Slave-Gerätezustand in den Master-Gerätezustand umgeschaltet worden ist.

2. Verfahren nach Anspruch 1, wobei das Erfassen (301) des Gerätezustands des ersten die Geräts (120, 31) umfasst:
Erfassen (301A) eines Pegels des CC-Pins in der USB-Schnittstellenschaltung,
wenn der Pegel des CC-Pins in der USB-Schnittstellenschaltung der hohe Pegel ist, Bestimmen (301B), dass sich das erste Gerät (120, 31) in dem Master-Gerätezustand befindet, und
wenn der Pegel des CC-Pins in der USB-Schnittstellenschaltung der niedrige Pegel ist, Bestimmen (301C), dass sich das erste Gerät (120, 31) in dem Slave-Gerätezustand befindet.

3. Verfahren nach Anspruch 1 oder 2, wobei die erste USB-Schnittstellenschaltung eine Schnittstellenschaltung ist, die einer Typ-C-Schnittstelle entspricht.

4. Vorrichtung zum Umschalten eines Zustands, umfassend:
eine erste Universal-Serial-Bus-"USB"-Schnittstelle,
eine erste USB-Schnittstellenschaltung (121),
ein Zustandserfassungsmodul (540), das dazu konfiguriert ist, wenn erfasst wird, dass die erste USB-Schnittstelle eines ersten Geräts (120, 31) mit einer zweiten USB-Schnittstelle eines zweiten Geräts (140, 32) über ein Verbindungskabel (160) verbunden ist, einen Gerätezustand des ersten Geräts(120, 31) zu erfassen, wobei der Gerätezustand anzeigt, dass sich das erste Geräte (120, 31) in einem Master-Gerätezustand oder einem Slave-Gerätezustand befindet,
ein erstes Anzeigemodul (550), das dazu konfiguriert ist, ein Zustandsumschalt-Eingabeaufforderungsfeld (311, 321) anzuzeigen, das zumindest den Gerätezustand und eine Zustandsumschalt-Steueroption enthält, wobei die Zustandsumschalt-Steueroption zum Auslösen der Zustandsumschaltanweisung verwendet wird,
ein Empfangsmodul (410), das dazu konfiguriert ist, eine Zustandsumschaltanweisung zu empfangen, die mit der Zustandsumschaltsteueroption ausgelöst wird, um das erste Gerät anzuweisen, seinen aktuellen Gerätezustand zu ändern,
ein erstes Schaltmodul (420), das dazu konfiguriert ist, wenn die Zustandsumschaltanweisung das erste Gerät (120, 31) anweist, eine Master-zu-Slave-Umschaltung durchzuführen, einen Pegel eines Konfigurationskanal-Pins-"CC"-Pins in der ersten USB-Schnittstellenschaltung über einen Logikcontroller von einem hohen Pegel auf einen niedrigen Pegel zu setzen,
ein zweites Schaltmodul (430), das dazu konfiguriert ist, wenn die Zustandsumschaltanweisung das erste Gerät (120, 31) anweist, eine Slave-zu-Master-Umschaltung durchzuführen, den Pegel des CC-Pins in der ersten USB-Schnittstellenschaltung über die Logiksteuerung von dem niedrigen Pegel auf den hohen Pegel zu setzen,
ein erstes Sendemodul (590), das dazu konfiguriert ist, ein Pegeländerungssignal über das Verbindungskabel (160) an das zweite Gerät (140, 32) zu senden, wobei das Pegeländerungssignal dazu verwendet wird, dem zweiten Geräte (140, 32) anzuzeigen, dass es den Pegel des CC-Pins in einer zweiten USB-Schnittstellenschaltung in dem zweiten Gerät (140, 32) ändern soll,
ein zweites Anzeigemodul (560), das dazu konfiguriert ist, wenn erkannt wird, dass sich der Pegel des CC-Pins in der zweiten USB-Schnittstellenschaltung in dem zweiten Gerät (140, 32) von dem niedrigen Pegel auf den hohen Pegel ändert, Master-zu-Slave-Umschalt-Erfolgsinformationen anzuzeigen, wobei die Master-zu-Slave-Umschaltung-Erfolgsinformationen verwendet werden, um anzuzeigen, dass das erste Gerät (120, 31) von dem Master- Gerätezustand in den Slave-Gerätezustand umgeschaltet worden ist, und
ein drittes Anzeigemodul (580), das dazu konfiguriert ist, wenn erkannt wird, dass sich der Pegel des CC-Pins in der zweiten USB-Schnittstellenschaltung in dem zweiten Gerät (140, 32) von dem hohen Pegel zu dem niedrigen Pegel ändert, Slave-zu-Master-Umschaltung-Erfolgsinformationen anzuzeigen, wobei die Slave-zu-Master-Umschaltungserfolgsinformationen verwendet werden, um anzuzeigen, dass das erste Gerät (120, 31) von dem Slave-Gerätezustand in den Master-Gerätezustand umgeschaltet worden ist.

5. Vorrichtung nach Anspruch 4, wobei das Zustandserfassungsmodul (540) umfasst:
ein Pegelerfassungs-Submodul (541), das dazu konfiguriert ist, einen Pegel des CC-Pins in der USB-Schnittstellenschaltung zu erfassen,
ein erstes Bestimmungs-Submodul (542), das dazu konfiguriert ist, wenn der Pegel des CC-Pins in der USB-Schnittstellenschaltung der hohe Pegel ist, zu bestimmen, dass sich das erste Gerät (120, 31) in dem Master-Gerätezustand befindet, und
ein zweites Bestimmungs-Submodul (543), das dazu konfiguriert ist, wenn der Pegel des CC-Pins in der USB-Schnittstellenschaltung der niedrige Pegel ist, zu bestimmen, dass sich das erste Gerät (120, 31) in dem Slave-Gerätezustand befindet.

6. Vorrichtung nach Anspruch 4 oder 5, wobei die USB-Schnittstellenschaltung eine Schnittstellenschaltung ist, die einer Typ-C-Schnittstelle entspricht.

7. Computerprogramm, das, wenn es auf einem Prozessor eines Geräts ausgeführt wird, ein Verfahren nach einem der Ansprüche 1 bis 3 durchführt.

8. Aufzeichnungsmedium, das von einem Computer gelesen werden kann und auf dem ein Computerprogramm nach Anspruch 7 aufgezeichnet ist.

## Revendications

1. Procédé pour commuter un état, appliqué dans un premier appareil (120, 31) comprenant une première interface de bus série universel « USB » et un premier circuit d'interface USB (121), comprenant :
lorsqu'il est détecté que la première interface USB est connectée à une seconde interface USB d'un second appareil (140, 32) via un câble de connexion (160), l'acquisition (301) d'un état d'appareil du premier appareil (120, 31), l'état d'appareil indiquant que le premier appareil (120, 31) est dans un état d'appareil maître ou un état d'appareil esclave ; et
l'affichage (302) d'une boîte d'invite de commutation d'état (311, 321) contenant au moins l'état d'appareil et une option de commande de commutation d'état, l'option de commande de commutation d'état étant utilisée pour déclencher un ordre de commutation d'état ;
la réception (201) de l'ordre de commutation d'état déclenché avec l'option de commande de commutation d'état, pour ordonner au premier appareil de changer son état d'appareil actuel ;
lorsque l'ordre de commutation d'état ordonne au premier appareil (120, 31) de réaliser une commutation maître-vers-esclave, le réglage (203) d'un niveau d'une broche de canal de configuration « CC » dans le circuit d'interface USB (121) d'un niveau haut à un niveau bas via un dispositif de commande logique ;
lorsque l'ordre de commutation d'état ordonne au premier appareil (120, 31) de réaliser une commutation esclave-vers-maître, le réglage (205) du niveau de la broche CC dans le premier circuit d'interface USB du niveau bas au niveau haut via le dispositif de commande logique ;
l'envoi (305) d'un signal de changement de niveau au second appareil (140, 32) via le câble de connexion (160), le signal de changement de niveau étant utilisé pour indiquer au second appareil (140, 32) de changer le niveau de la broche CC dans un second circuit d'interface USB dans le second appareil (140, 32) ;
lorsqu'il est détecté que le niveau de la broche CC dans le second circuit d'interface USB dans le second appareil (140, 32) change du niveau bas au niveau haut, l'affichage (306) d'informations de réussite de commutation maître-vers-esclave, les informations de réussite de commutation maître-vers-esclave étant utilisées pour indiquer que le premier appareil (120, 31) a été commuté de l'état d'appareil maître à l'état d'appareil esclave ;
lorsqu'il est détecté que le niveau de la broche CC dans le second circuit d'interface USB dans le second appareil (140, 32) change du niveau haut au niveau bas, l'affichage (309) d'informations de réussite de commutation esclave-vers-maître, les informations de réussite de commutation esclave-vers-maître étant utilisées pour indiquer que le premier appareil (120, 31) a été commuté de l'état d'appareil esclave à l'état d'appareil maître.

2. Procédé selon la revendication 1, dans lequel l'acquisition (301) de l'état d'appareil du premier appareil (120, 31) comprend :
l'acquisition (301A) d'un niveau de la broche CC dans le circuit d'interface USB ;
lorsque le niveau de la broche CC dans le circuit d'interface USB est le niveau haut, la détermination (301B) que le premier appareil (120, 31) est dans l'état d'appareil maître ; et
lorsque le niveau de la broche CC dans le circuit d'interface USB est le niveau bas, la détermination (301C) que le premier appareil (120, 31) est dans l'état d'appareil esclave.

3. Procédé selon la revendication 1 ou 2, dans lequel le premier circuit d'interface USB est un circuit d'interface correspondant à une interface de type C.

4. Dispositif pour commuter un état, comprenant :
une première interface de bus série universel « USB » ;
un premier circuit d'interface USB (121) ;
un module d'acquisition d'état (540) configuré pour, lorsqu'il est détecté que la première interface USB du premier appareil (120, 31) est connectée à une seconde interface USB d'un second appareil (140, 32) via un câble de connexion (160), acquérir un état d'appareil du premier appareil (120, 31), l'état d'appareil indiquant que le premier appareil (120, 31) est dans un état d'appareil maître ou un état d'appareil esclave ;
un premier module d'affichage (550) configuré pour afficher une boîte d'invite de commutation d'état (311, 321) contenant au moins l'état d'appareil et une option de commande de commutation d'état, l'option de commande de commutation d'état étant utilisée pour déclencher un ordre de commutation d'état ;
un module de réception (410) configuré pour recevoir l'ordre de commutation d'état déclenché avec l'option de commande de commutation d'état, pour ordonner au premier appareil de changer son état d'appareil actuel ;
un premier module de commutation (420) configuré pour, lorsque l'ordre de commutation d'état ordonne au premier appareil (120, 31) de réaliser une commutation maître-vers-esclave, régler un niveau d'une broche de canal de configuration « CC » dans le premier circuit d'interface USB d'un niveau haut à un niveau bas via un dispositif de commande logique ;
un second module de commutation (430) configuré pour, lorsque l'ordre de commutation d'état ordonne au premier appareil (120, 31) de réaliser une commutation esclave-vers-maître, régler le niveau de la broche CC dans le premier circuit d'interface USB du niveau bas au niveau haut via le dispositif de commande logique ;
un premier module d'envoi (590) configuré pour envoyer un signal de changement de niveau au second appareil (140, 32) via le câble de connexion (160), le signal de changement de niveau étant utilisé pour indiquer au second appareil (140, 32) de changer le niveau de la broche CC dans un second circuit d'interface USB dans le second appareil (140, 32) ;
un deuxième module d'affichage (560) configuré pour, lorsqu'il est détecté que le niveau de la broche CC dans le second circuit d'interface USB dans le second appareil (140, 32) change du niveau bas au niveau haut, afficher des informations de réussite de commutation maître-vers-esclave, les informations de réussite de commutation maître-vers-esclave étant utilisées pour indiquer que le premier appareil (120, 31) a été commuté de l'état d'appareil maître à l'état d'appareil esclave ; et
un troisième module d'affichage (580) configuré pour, lorsqu'il est détecté que le niveau de la broche CC dans le second circuit d'interface USB dans le second appareil (140, 32) change du niveau haut au niveau bas, afficher des informations de réussite de commutation esclave-vers-maître, les informations de réussite de commutation esclave-vers-maître étant utilisées pour indiquer que le premier appareil (120, 31) a été commuté de l'état d'appareil esclave à l'état d'appareil maître.

5. Dispositif selon la revendication 4, dans lequel le module d'acquisition d'état (540) comprend :
un sous-module d'acquisition de niveau (541) configuré pour acquérir un niveau de la broche CC dans le circuit d'interface USB ;
un premier sous-module de détermination (542) configuré pour, lorsque le niveau de la broche CC dans le circuit d'interface USB est le niveau haut, déterminer que le premier appareil (120, 31) est dans l'état d'appareil maître ; et
un second sous-module de détermination (543) configuré pour, lorsque le niveau de la broche CC dans le circuit d'interface USB est le niveau bas, déterminer que le premier appareil (120, 31) est dans l'état d'appareil esclave.

6. Dispositif selon la revendication 4 ou 5, dans lequel le circuit d'interface USB est un circuit d'interface correspondant à une interface de type C.

7. Programme d'ordinateur, qui lors de son exécution sur un processeur d'un dispositif, réalise un procédé selon l'une quelconque des revendications 1 à 3.

8. Support d'enregistrement lisible par un ordinateur et ayant, enregistré sur celui-ci, un programme d'ordinateur selon la revendication 7.
